# EUROPÄISCHE PATENTSCHRIFT

(11) **EP 3 027 891 B1**
(45) Veröffentlichungstag und Bekanntmachung des Hinweises auf die Patenterteilung: **09.08.2017**
(21) Anmeldenummer: 14729022.5
(22) Anmeldetag: 11.06.2014
(51) Int. Cl.: F03B 17/06, F03B 13/26, F03D 1/06

(54) **TURBINE FÜR EIN STRÖMUNGSKRAFTWERK**
TURBINE FOR A CONTINUOUS-FLOW POWER PLANT
TURBINE POUR UNE HYDROLIENNE

(30) Priorität: 02.08.2013 DE 102013012844
(43) Veröffentlichungstag der Anmeldung: 08.06.2016
(73) Patentinhaber: Voith Patent GmbH, 89522 Heidenheim (DE)
(72) Erfinder: SICKINGER, Christoph, 89522 Heidenheim (DE); HENNES, Patrick, 89542 Herbrechtingen (DE); SCHEUNERT, Benjamin, 89520 Heidenheim (DE)
(74) Vertreter: Dr. Weitzel & Partner
(86) Internationale Anmeldenummer: PCT/EP2014/062142
(87) Internationale Veröffentlichungsnummer: WO 2015/014523

(56) Entgegenhaltungen:
- CN-A- 103 032 266
- JP-A- S60 162 073
- US-A1- 2009 297 348

## Beschreibung

Die Erfindung betrifft das Gebiet der Strömungskraftwerke. Dabei geht es insbesondere um Unterwasser-Strömungskraftwerke, aber auch um Windkraftwerke. Strömungskraftwerke umfassen als wesentliche Bauteile eine Wasserturbine, einen mit dieser in Triebverbindung stehenden Generator sowie eine auf dem Gewässerboden stehende Tragkonstruktion. Solche Strömungskraftwerke finden Anwendung in jeglicher Art von strömenden Gewässern wie Flüssen, besonders aber im Meer. Dabei wird beispielsweise die Energie von Tidenströmungen ausgenutzt.
Turbine und Generator befinden sich in einem torpedoförmigen Gehäuse. Siehe DE 10 2013 001 212 sowie DE 10 212 025 127. Turbine, Generator und Gehäuse bilden die sogenannte Gondel. US 8 109 728 B2 oder US 2009/0297348 beschreibt eine Turbine mit einem Nabenkörper, der eine Anzahl von Turbinenblättern trägt, einen im Nabenkörper angeordneten Verstellkörper sowie eine Lenkerkette für jedes Blatt.
Die Turbine weist einen Nabenkörper auf, der eine Anzahl von Turbinenblättern trägt. Häufig handelt es sich um drei Turbinenblätter. Diese sind um ihre Längsachse verdrehbar, und zwar nach Möglichkeit um 180 Grad. Mit dem Verdrehen erfolgt ein Anpassen an die Betriebsbedingungen, vor allem an die Richtung und die Energie der ankommenden Strömung.
Die Einrichtungen zum Verstellen der Blätter sind vielfältig. Häufig werden komplexe Zahnkranz-Mechanismen verwendet. Diese müssen gegen das umgebende Medium abgedichtet werden. Bei Unterwasser-Strömungskraftwerken im Meer muss die Abdichtung höchst zuverlässig sein. Dies führt zu teuren Lösungen. Es sind ständig Wartungen erforderlich. Da die Verdreh- oder Verstelleinrichtungen dichtend gekapselt sind, sind solche Arbeiten aufwändig.

Der Erfindung liegt die Aufgabe zugrunde, eine Turbine, vor allem deren Verdrehapparat, derart zu gestalten, dass er im Aufbau einfach ist, dass er gegen das umgebende Medium nicht abgedichtet oder umkapselt sein muss, sondern dem Medium ausgesetzt werden kann, und dass sich der Blattanstellwinkel zuverlässig und mit hoher Reproduzierbarkeit einstellen lässt.
Diese Aufgabe wird mit einer Turbine gemäß den Merkmalen von Anspruch 1 gelöst.
Demgemäß enthält der Grundgedanke der Erfindung die Verwendung eines Verdrehapparates. Dieser ist vom Nabenkörper umschlossen. Dabei handelt es sich um eine sogenannte sphärische Gelenkkette. An den Nabenkörper ist eine Welle angeschlossen, die von der Turbine erzeugtes Drehmoment auf eine Arbeitsmaschine überträgt. An den Verdrehapparat sind zwei Lenker pro Blatt angeschlossen. Die Lenker übertragen ein Verdrehmoment vom Verdrehapparat auf das betreffende Blatt.
Die erfindungsgemäße sphärische Gelenkkette erbringt die folgenden Vorteile:
- eine einfache Konstruktion, die kostengünstig herstellbar und leicht zu warten ist;
- die Bauteile des Verdrehapparates können dem Medium (Wasser, Seewasser) ausgesetzt und somit gleichzeitig geschmiert werden;
- das Gewicht der Turbine wird verringert;
- kurzfristige Belastungsspitzen, die zur Energiegewinnung nur wenig beitragen, lassen sich vermeiden;
- ganz allgemein sind die Belastungen begrenzt, und zwar sowohl die statischen als auch diejenigen, die zur Bauteil-Ermüdung beitragen;
- bestimmte Verdrehpositionen der Blätter lassen sich rasch einstellen, beispielsweise Abbremsen und Parken, Verdrehen der Blätter auf die sogenannte Fahnenstellung, was die Turbine sicher macht;
- der Blattwinkel wird aktiv eingestellt und kann daher eine Bremsfunktion übernehmen, sodass ein besonderes Bremssystem entfällt und die Herstellungskosten niedriger werden;
- große Robustheit durch wenige einfache Bauteile.

Bei den konkreten Ausführungsbeispielen herrschen folgende Bedingungen:
- alle Gelenkdrehachsen schneiden sich in einem gemeinsamen Punkt;
- es gibt keine translatorischen Gelenkfreiheitsgrade;
- alle Gelenkpunkte bewegen sich auf konzentrischen Kugeln;
- die Gelenkdrehachsen der Blätter schneiden sich in einem Punkt der Drehachse;
- die Gelenkdrehachse des Verdrehapparates weist ebenfalls zur Drehachse des Nabenkörpers;
- die Gelenkdrehachsen aller Lenker weisen ebenfalls zur Drehachse des Nabenkörpers.

Die Gelenkpunkte der Lenker werden als wasserbeständige Drehgelenke ausgeführt. Die Lenkerkette kann somit geflutet betrieben werden. Die Gelenkpunkte und die Hebelverhältnisse werden derart gestaltet, dass sich am Ausgang der Lenkerkette eine Verdrehung von mindestens 180 Grad einstellen kann. Gelenke und Hebel kollidieren beim Verstellen nicht miteinander.

Die Erfindung ist anhand der Zeichnung in 3D-Darstellungen näher erläutert:
- Figur 1: zeigt einen Verdrehapparat mit drei Lenkerketten.
- Figur 2: zeigt den Gegenstand von Figur 1 in einer zweiten Ansicht.
- Figur 3: zeigt den Gegenstand von Figur 1 in einer dritten Ansicht.'
- Figur 4: zeigt den Gegenstand von Figur 1 in einer Draufsicht in Richtung auf die Verdrehachse des Verdrehapparates.
- Figur 5: zeigt die einzelnen Komponenten einer Turbinenblattlagerung.
- Figur 6: zeigt einen Verdrehapparat, eingebaut in einen Nabenkörper, in einer ersten Ansicht.
- Figur 7: zeigt den Gegenstand von Figur 6 vergrößert in einer zweiten Ansicht.
- Figur 8: zeigt den Gegenstand von Figur 6, wiederum vergrößert, in einer dritten Ansicht.

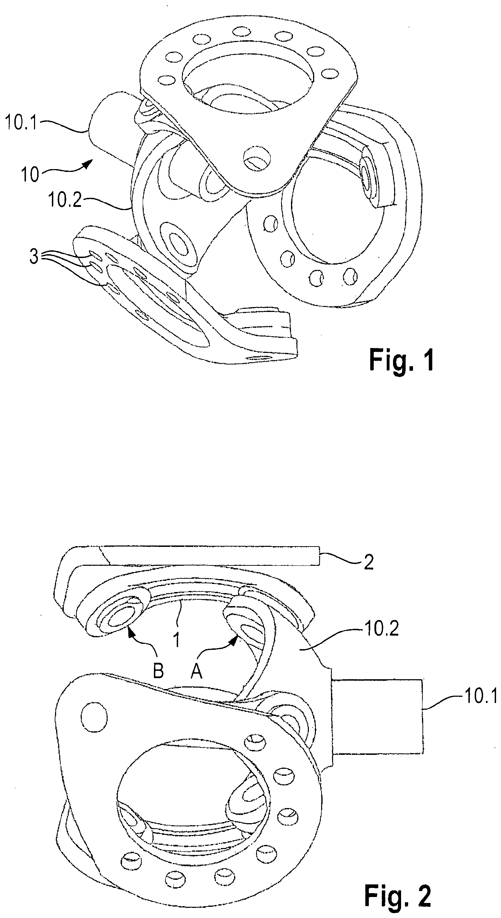

Aus Figur 1 erkennt man die wesentlichen Teile zum Verstellen der Blätter einer hier nicht gezeigten Turbine. Zentrales Bauteil ist ein Verstellkörper 10. Der Verstellkörper 10 hat im Wesentlichen Kelchform. Er umfasst einen Antriebszapfen 10.1 und eine Kugelschale 10.2.

An die Kugelschale 10.2 sind drei Lenkerketten angeschlossen. Diese sind im vorliegenden Falle einander völlig gleich. Jedoch sind auch Abweichungen möglich. Jede Lenkerkette weist jeweils zwei Lenker auf. Wie die drei Lenkerketten aufgebaut sind, soll anhand einer dieser Lenkerketten mit Lenkern 1 und 2 erläutert werden. So sieht man aus Figur 2, dass der Lenker 1 zwei Drehgelenke aufweist, nämlich ein erstes Drehgelenk A und ein zweites Drehgelenk B. Drehgelenk A stellt eine erste Gelenkverbindung zwischen dem Verstellkörper 10 und dem ersten Ende des ersten Lenkers 1 her. Man könnte den ersten Lenker auch "Anlenkhebel" nennen.

Drehgelenk B befindet sich am zweiten Ende des Anlenkhebels 1 und stellt eine gelenkige Verbindung zum zweiten Lenker dar. Diesen Lenker 2 könnte an auch Blattanschlusslenker nennen.

Das zweite Ende des Blattanschlusslenkers 2 hat die Gestalt eines Kreisringes. Der Kreisring weist Bohrungen 3 zum Hindurchführen von Schrauben auf, mit welchen das hier nicht gezeigte Blatt am Blattanschlusslenker 2 fixiert wird. Das zweite, kreisringförmige Ende des Blattanschlusslenkers 2 ist in einen Nabenkörper 11 eingelassen, der später noch beschrieben werden soll.

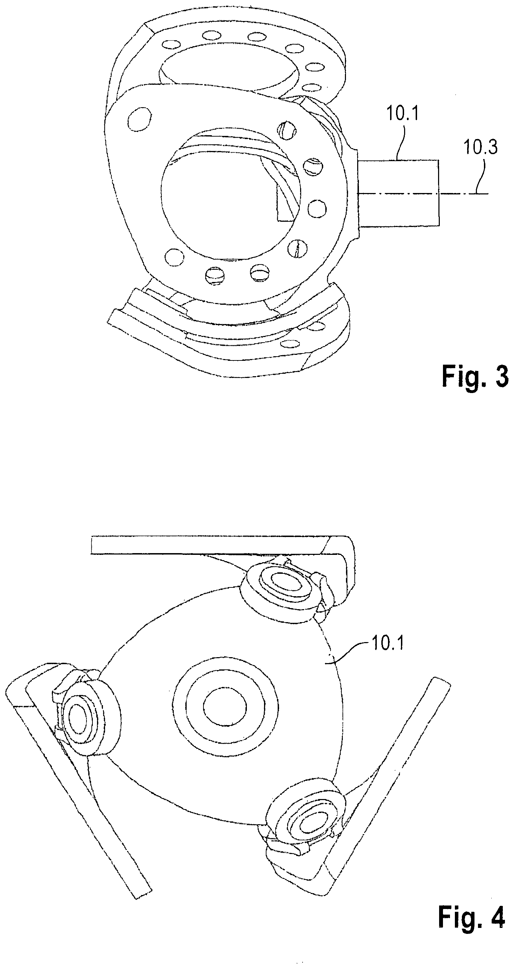

Figur 4 ist eine Ansicht auf den Verstellkörper 10 in Richtung von dessen Verdrehachse gesehen.

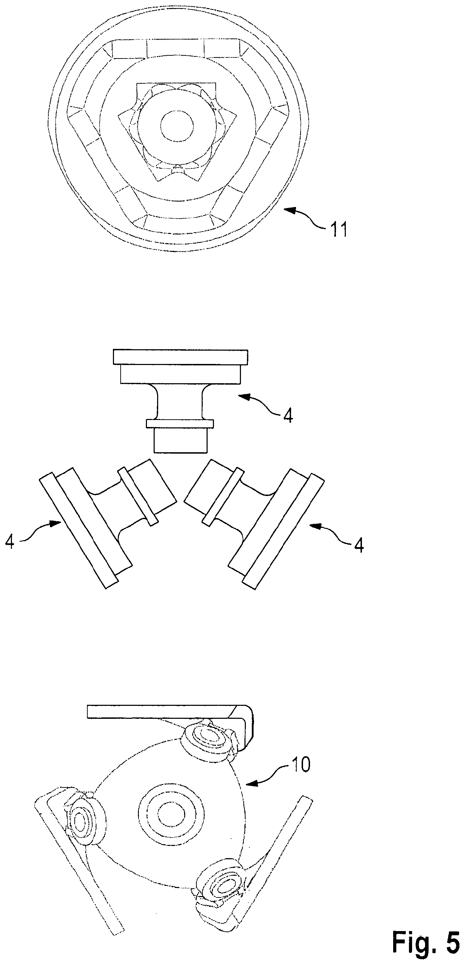

Die Figuren 5 bis 8 zeigen zusätzlich zu dem Verstellkörper, den drei Lenkerketten, den Blattanschlüssen 4, auch einen Nabenkörper 11.

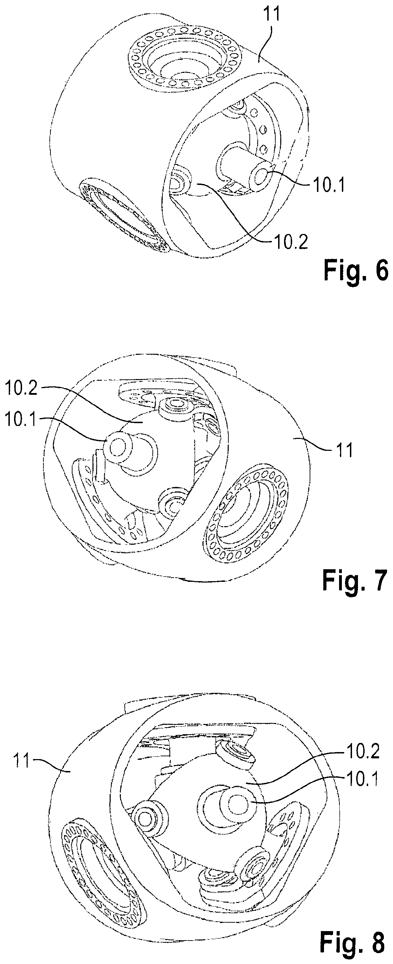

Die Figuren 6, 7 und 8 lassen sehr gut erkennen, wie der Verstellkörper 10 sowie die drei Lenkerketten in den Nabenkörper 11 eingebaut sind. Vor allem erkennt man das jeweils zweite Ende des zweiten Endes, des sogenannten Blattanschlusslenkers. Siehe die Kreisringform mit den Bohrungen für die Befestigungsschrauben zum Befestigen der drei Blätter.

Vor allem aus Figur 2 erkennt man, dass der erste Lenker 1 mit den Drehgelenken A und B in Seitenansicht gekrümmt ist. Er hat denselben Krümmungsradius, wie die Kugelschale 10.2 des Verstellkörpers 10. Dies gilt natürlich für alle drei Lenkerketten. Der erste Lenker 1 oder Anlenkhebel ist kugelig gekrümmt.

Der Nabenkörper 11 wird beim Betrieb der Turbine angetrieben. Über eine hier nicht dargestellte Welle überträgt er das von der Turbine erzeugte Drehmoment auf eine hier nicht gezeigte Kraftmaschine, beispielsweise auf einen Generator. Der Verstellkörper 10 lässt sich um die Verdrehachse des Antriebszapfens 10.1 verdrehen - auch während des Betriebes. Mit dem Verdrehen werden über die Lenkerketten auch gleichzeitig sämtliche Blätter verdreht, beispielsweise um 180 Grad oder mehr.

### Bezugszeichenliste

- 1: Lenker
- 2: Lenker
- 3: Bohrungen
- 4: Blattanschluss
- 10: Verstellkörper
- 10.1: Antriebszapfen
- 10.2: Kugelschale
- 10.3: Verdrehachse
- 11: Naben körper
- A: Drehgelenk
- B: Drehgelenk

## Patentansprüche

1. Turbine, insbesondere für ein Strömungskraftwerk, umfassend die folgenden Merkmale:
1.1 einen Nabenkörper (11) der eine Welle zum Übertragen des von der Turbine erzeugten Drehmomentes auf eine Arbeitsmaschine aufweist;
1.2 eine Anzahl von Turbinenblättern, die vom Nabenkörper (11) getragen und um ihre Längsachsen verdrehbar sind;
1.3 im Inneren des Nabenkörpers (11) ist ein Verstellkörper (10) vorgesehen, gestaltet nach Art einer sphärischen Gelenkkette, welcher zur Welle koaxial verläuft und um die Wellenachse verdrehbar ist;
1.4 eine Lenkerkette für jedes Blatt mit zwei Lenkern (1, 2), nämlich einen ersten Lenker (1), dessen erstes Ende am Verstellkörper (10) über ein Drehgelenk (A) angelenkt ist, und einen zweiten Lenker (2), dessen erstes Ende an das zweite Ende des ersten Lenkers (1) über ein Drehgelenk (B) angelenkt ist, und dessen zweites Ende am Nabenkörper (11) um die Längsachse des betreffenden Blattes verdrehbar gelagert ist;
1.5 wobei der Verstellkörper (10) einen Antriebszapfen (10.1) sowie eine Kugelschale (10.2) umfasst und
1.6 wenigstens der erste Lenker (1) in Seitenansicht gesehen sphärisch gestaltet ist.

2. Turbine nach Anspruch 1, **dadurch gekennzeichnet, dass** wenigstens der erste Lenker (1) geometrisch ähnlich gestaltet ist, wie die Kugelschale (10.2).

3. Turbine nach einem der Ansprüche 1 bis 2, **dadurch gekennzeichnet, dass** das zweite Ende des zweiten Lenkers (2) ringförmig ist, in den Nabenkörper (11) eingelassen und beim Verdrehen des Verstellkörpers (10) ebenfalls eine Verdrehung ausführt, um das betreffende Blatt zu verdrehen.

4. Turbine nach einem der Ansprüche 1 bis 3, **dadurch gekennzeichnet, dass** diese Bestandteil eines Windkraftwerkes oder eines Wasserkraftwerkes ist.

## Claims

1. A turbine, especially for a flow power plant, comprising the following features:
1.1 a hub body (11) which comprises a shaft for transmitting the torque generated by the turbine to a driven machine;
1.2 a plurality of turbine blades which are carried by the hub body (11) and are twistable about their longitudinal axes;
1.3 an adjusting body (10) is provided in the interior of the hub body (11), arranged in the manner of a spherical link chain which extends coaxially to the shaft and is twistable about the shaft axis;
1.4 a guide rod chain for each blade, comprising two guide rods (1, 2), namely a first guide rod (1) whose first end is linked to the adjusting body (10) via a swivel joint (A), and a second guide rod (2) whose first end is linked to the second end of the first guide rod (1) via a swivel joint (B), and whose second end is twistably mounted on the hub body (11) about the longitudinal axis of the respective blade;
1.5 wherein the adjusting body (10) comprises a drive pin (10.1) and a spherical shell (10.2), and
1.6 at least the first guide rod (1) is spherically arranged as seen in a side view.

2. A turbine according to claim 1, **characterized in that** at least the first guide rod (1) is arranged in a geometrically similar way as the spherical shell (10.2).

3. A turbine according to one of the claims 1 to 2, **characterized in that** the second end of the second guide rod (2) is annular, embedded in the hub body (11) and also performs twisting during twisting of the adjusting body (10) in order to twist the respective blade.

4. A turbine according to one of the claims 1 to 3, **characterized in that** it is a component of a wind power plant or a hydroelectric power plant.

## Revendications

1. Turbine, en particulier pour une centrale électrique à flux, comprenant les caractéristiques suivantes :
1.1 un corps de moyeu (11) présentant un arbre pour transmettre le couple produit par la turbine à une machine de travail ;
1.2 un certain nombre d'aubes de turbine portées par le corps de moyeu (11) et pouvant pivoter sur leurs axes longitudinaux ;
1.3 un corps de réglage (10) prévu à l'intérieur du corps de moyeu (11) et conformé comme une chaîne articulée sphérique coaxiale de l'arbre et capable de rotation autour de l'axe de l'arbre ;
1.4 une chaîne de bielles pour chaque aube avec deux bielles (1, 2), une première bielle (1) dont la première extrémité est articulée sur le corps de réglage (10) par une articulation pivotante (A) et une deuxième bielle (2) dont la première extrémité est articulée sur la deuxième extrémité de la première bielle (1) par une articulation pivotante (B) et dont la deuxième extrémité est supportée sur le corps de moyeu (11) avec possibilité de rotation autour de l'axe longitudinal de l'aube en question ;
1.5 dans laquelle le corps de réglage (10) comprend un tourillon d'entraînement (10.1) et une coque sphérique (10.2) et
1.6 la première bielle (1), au minimum, a une forme sphérique en vue de côté.

2. Turbine selon la revendication 1, **caractérisée en ce que** la première bielle (1), au minimum, a une conformation géométrique similaire de celle de la coque sphérique (10.2).

3. Turbine selon l'une des revendications 1 à 2, **caractérisée en ce que** la deuxième extrémité de la deuxième bielle (2) est annulaire, insérée dans le corps de moyeu (11), et exécute également une rotation lors de la rotation du corps de réglage (10) pour faire tourner l'aube en question.

4. Turbine selon l'une des revendications 1 à 3, **caractérisée en ce qu'**elle fait partie d'une centrale électrique éolienne ou d'une centrale électrique hydraulique.
